# EUROPEAN PATENT APPLICATION

(11) **EP 2 731 100 A2**
(43) Date of publication of application: **14.05.2014**
(21) Application number: 13180451.0
(22) Date of filing: 14.08.2013
(51) Int. Cl.: G09G 5/00

(54) **Display apparatus and method for controlling thereof**

(30) Priority: 09.11.2012 KR 20120126882
(71) Applicant: Samsung Electronics Co., Ltd, Gyeonggi-do 443-742 (KR)
(72) Inventor: Lee, Sung-ju, Gyeonggi-do (KR); Kim, Jung-keun, Gyeonggi-do (KR); Kim, Hak-jae, Gyeonggi-do (KR)
(74) Representative: Taor, Simon Edward William

(57) **Abstract**

A display apparatus is provided. The display apparatus includes a display, a memory which stores screen setting data on the display, an internal interface which performs data communication in the display apparatus, and a switch which switches between communication between the memory and a host apparatus or communication between the memory and the internal interface. The switch is driven by hot plug power or main power according to a predetermined condition, and, if the main power is turned off, the switch is driven by the hot plug power and performs communication with the host apparatus. Accordingly, the display apparatus satisfies a communication standard for recognizing apparatuses using a single memory.

## Description

Methods and apparatuses consistent with exemplary embodiments relate to a display apparatus and a method for controlling thereof, and more particularly, to a display apparatus which can communicate with a host apparatus and a method for controlling thereof.

Some display apparatus may be the integrated type that includes an input unit and a central processing unit. However, some display apparatuses may be separate from a host apparatus and are connected to the host apparatus for use, as in a personal computer (PC).

If the display apparatus is used separately from the host apparatus, the host apparatus may be connected to many display apparatuses. Therefore, the host apparatus receives screen setting data from the display apparatus when it is initially booted, and returns data that is adjusted according to an input setting value to the display apparatus.

The display apparatus stores screen setting data such as extended display identification data (EDID) to be transmitted to the host apparatus in an electrically erasable programmable read-only memory (EEPROM). The screen setting data stored in the EEPROM is transmitted to the host apparatus when the host apparatus is booted, or is stored in an internal random access memory (RAM) and is transmitted to the host apparatus afterward.

However, if the display apparatus is turned off, the screen setting data cannot be transmitted to the host apparatus when the host apparatus is booted. A related art method does not support a communication standard for recognizing apparatuses between the host apparatus and the display apparatus when the host apparatus is booted. In this case, there is a problem in that a black screen or a screen that is not consistent with display screen setting is displayed when the host apparatus is booted. Also, the display apparatus uses a separate memory to store the screen setting data to be transmitted to the host apparatus in addition to an internal data storage memory. In this case, due to the use of the separate memory, there is a problem in that a manufacturing cost increases and a circuit becomes complicated.

Therefore, there is a demand for a method for reducing a manufacturing cost and simplifying a circuit, while satisfying a communication standard for recognizing apparatuses between a host apparatus and a display apparatus.

One or more exemplary embodiments may overcome the above disadvantages and other disadvantages not described above. However, it is understood that one or more exemplary embodiments are not required to overcome the disadvantages described above, and may not overcome any of the problems described above.

One or more exemplary embodiments provide a display apparatus which can communicate with a host apparatus to recognize apparatuses using a single EEPROM even when power is not supplied to the display apparatus, and a method for controlling thereof.

According to an aspect of an exemplary embodiment, there is provided a display apparatus including: a display; a memory which stores at least screen setting data related to the display; an interface which performs data communication in the display apparatus; and a switch which switches between a first communication between the memory and a host apparatus and a second communication between the memory and the internal interface, wherein the switch is driven by one from among hot plug power and main power according to a condition, and, if the main power is turned off, the switch is driven by the hot plug power and switches to communication with the host apparatus. The condition may be predetermined.

The display apparatus may further include a controller which is driven by the main power, and, if the main power is turned on, the switch may be driven by the main power, and the controller may control the switch to switch between a first communication between the memory and the host apparatus and the second communication between the memory and the internal interface.

The switch may include: a power selector which receives one from among the hot plug power and the main power; and a multiplexer which selects one from among data that is input from the host apparatus and data that is input from the interface, and stores the data in the memory. The power selector may comprise a diode which, if power is supplied from only one power line, prevents a reverse current from flowing into another line.

The switch may further include a de-multiplexer which outputs the screen setting data stored in the memory to one from among the host apparatus and the internal interface.

The memory may be a single electrically erasable programmable read-only memory (EEPROM).

If the main power is turned off, the hot plug power may be supplied from the host apparatus to output the screen setting data to the host apparatus.

The screen setting data may include at least one from among extended display identification data (EDID), on-screen display (OSD) setting data, and user setting data.

According to an aspect of another exemplary embodiment, there is provided a method for controlling of a display apparatus which stores screen setting data in a memory, the method including: receiving at least one from among main power and hot plug power; and switching between a first communication between the memory and a host apparatus and a second communication between the memory and an interface of the display apparatus, wherein the switching includes, if the main power is turned off, driving the display apparatus by the hot plug power and performing communication with the host apparatus, and, if the main power is turned on, driving the display apparatus by the main power and switching between the first communication between the memory and the host apparatus and the second communication between the memory and the internal interface. The receiving may comprise, if power is supplied from only one power line, preventing a reverse current from flowing into another line.

The switching may include selecting one from among data that is input from the host apparatus and data that is input from the internal interface, and storing the data in the memory.

The switching may include outputting the screen setting data stored in the memory to one from among the host apparatus and the internal interface.

The memory may be a single EEPROM.

If the main power is turned off, the hot plug power may be supplied from the host apparatus to output the screen setting data to the host apparatus.

The screen setting data may include at least one of EDID, OSD setting data, and user setting data.

A system may comprise the above-described host apparatus and display apparatus.

According to various exemplary embodiments described above, a communication standard for recognizing apparatuses between the host apparatus and the display apparatus can be satisfied using a single memory.

The above and/or other aspects will be more apparent by describing in detail exemplary embodiments, with reference to the accompanying drawings, in which:
FIG. 1 is a view illustrating a connection between a host apparatus and a display apparatus according to an exemplary embodiment;
FIGS. 2 and 3 are block diagrams illustrating a display apparatus according to an exemplary embodiment;
FIGS. 4 and 5 are block diagrams illustrating a switch according to an exemplary embodiment; and
FIG. 6 is a flowchart illustrating a method for controlling of a display apparatus according to an exemplary embodiment.

Hereinafter, exemplary embodiments will be described in greater detail with reference to the accompanying drawings.

In the following description, the same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

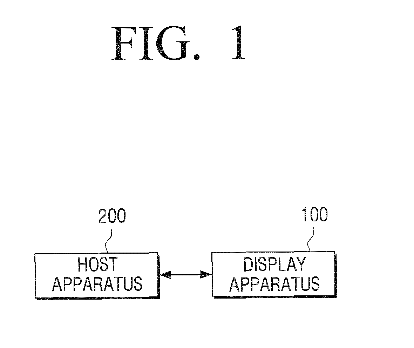

FIG. 1 is a view illustrating a connection between a host apparatus and a display apparatus according to an exemplary embodiment.

Referring to FIG. 1, a display apparatus 100 is connected to a host apparatus 200. The display apparatus 100 may be implemented by using a monitor or a television (TV). The host apparatus 200 may be implemented by using a PC, a notebook computer, a digital video recorder (DVR), a digital versatile disk (DVD) player, a Blu-ray disk player, or a game console. If the host apparatus 200 is connected to the display apparatus 100, the host apparatus 200 receives screen setting data from the display apparatus 100. The screen setting data initially received by the host apparatus 200 may be extended display identification data (EDID) for example. The EDID refers to information of a simple format regarding graphics which are formed based on performance of the display apparatus 100. The EDID may be a provider, a product identification block, a basic display medium, a characteristic, a color characteristic, a frequency, a resolution, and an extension flag, for example. The EDID is transmitted from the display apparatus 100 to the host apparatus 200 when the host apparatus 200 is initially connected to the display apparatus 100. Accordingly, the display apparatus 100 is able to display in an optimal condition even if a user does not know about the display apparatus 100.

The EDID of the display apparatus 100 is transmitted to the host apparatus 200 according to a display data channel (DDC) communication protocol. The DDC communication may use an I2C bus. That is, a data line (DDC_SDA) and a clock line (DDC_SCL) may be used. If the host apparatus 200 receives the EDID, the host apparatus 200 transmits a response signal in response to the EDID. If the display apparatus 100 is connected to the host apparatus 200 again, the display apparatus 100 and the host apparatus 200 exchange the EDID information with each other, and support hot plug detection. The hot plug detection may be supported by a digital interface such as a digital visual interface (DVI) and a high-definition multimedia interface (HDMI).

If the display apparatus 100 and the host apparatus 200 are connected to each other, the host apparatus 200 supplies a voltage to a hot plug detect pin (HPD pin) through the interface. For example, if a high voltage (for example, 5V) is applied to the HPD pin, it means that the host apparatus 200 and the display apparatus 100 are connected to each other. If a low voltage (for example, 0V) is applied to the HPD pin, it means that the host apparatus 200 and the display apparatus 100 are disconnected from each other.

Hereinafter, the display apparatus 100 according to an exemplary embodiment will be explained.

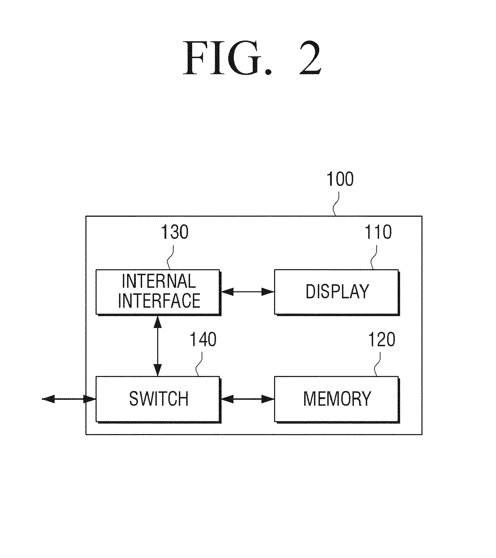

FIG. 2 is a block diagram illustrating the display apparatus 100 according to an exemplary embodiment. Referring to FIG. 2, the display apparatus 100 includes a display 110, a memory 120, an internal interface 130, and a switch 140.

The display 110 displays screen data that is received from the host apparatus 200. The display 110 may be implemented by various display units such as a liquid crystal display (LCD) panel, a plasma display panel (PDP), an organic light emitting diode (OLED), a vacuum fluorescent display (VFD), a field emission display (FED), and an electro luminescence display (ELD). In some situations, the display 110 may be implemented by using a general display panel without a touch input function or a touch display panel that can recognize user manipulation using a proximity sensor or a touch sensor. If the display 110 is implemented by using a touch display panel, the display 110 may receive at least one touch gesture through a user body (for example, fingers including the thumb) or an inputting means which is detectable (for example, a stylus pen).

The memory 120 stores screen setting data of the display apparatus 100. In the present disclosure, the memory 120 refers to a storage apparatus that stores screen setting data. For example, the screen setting data includes EDID, on screen display (OSD) setting information and user setting information. The OSD refers to a control function menu image that allows the user to directly optimize the screen of the display apparatus 100. The screen setting menu controllable by the OSD includes brightness, contrast, RGB control, an aspect ratio, and location control. That is, the memory 120 stores the screen setting menu and setting values, and also stores setting values that are changed by the user. The memory 120 may be an EEPROM for example.

The internal interface 130 refers to a bus through which data is transmitted or a control signal line through which a control signal is transmitted. The internal interface 130 is connected to each element of the display apparatus 100 such as the display 110 and the switch 140, and relays the data or the control signal.

The switch 140 switches a communication line for communication between the memory 120 and the host apparatus 200 or communication between the memory 120 and the internal interface 130. For example, if the display apparatus 100 transmits the EDID to the host apparatus 200, the switch 140 connects the communication line in order for the memory 120 and the host apparatus 200 to communicate with each other. If OSD setting data is stored in the memory 120, the switch 140 connects the communication line in order for the memory 120 and the internal interface 130 to communicate with each other. Also, the switch 140 may receive power from at least one of a hot plug power source and a main power source. Detailed configuration and operation of the switch 140 will be explained below in detail.

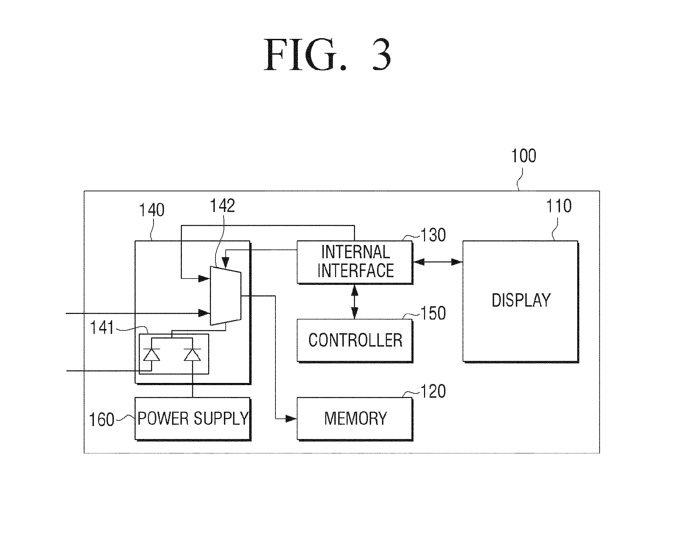

FIG. 3 is a block diagram illustrating the display apparatus in detail according to an exemplary embodiment.

Referring to FIG. 3, the display apparatus 100 includes a display 110, a memory 120, an internal interface 130, a switch 140, a controller 150, and a power supply 160. The display 110, the memory 120, and the internal interface 130 have been described above with reference to FIG. 2, and thus a redundant explanation is omitted.

The switch 140 may include a power selector 141 and a multiplexer 142. The power selector 141 receives hot plug power or main power. The multiplexer 142 selects one of data that is input from the host apparatus and data that is input through the internal interface, and stores the data in the memory 120. The power supply 160 refers to a main power source that supplies power to the display apparatus 100. The display apparatus 100 is turned on when main power is supplied.

The controller 150 controls the switch 140 to switch for communication between the memory 120 and the host apparatus 200 or communication for the memory 120 and the internal interface 130. The controller 150 may be driven by main power. A control command of the controller 140 may be transmitted to the multiplexer 142 of the switch 140 through the internal interface 130. For example, if the controller 150 instructs the switch 140 to communicate with the host apparatus 200, the command to communicate with the host apparatus 200 is transmitted to the multiplexer 142 of the switch 140 through a control line of the internal interface 130. The multiplexer 142 connects a data communication line between the host apparatus 200 and the memory 120 according to the command of the controller 150. Likewise, if the controller 150 instructs the switch 140 to communicate with the internal interface 130, the command to communicate with the internal interface 130 is transmitted to the multiplexer 142 of the switch 140 through the control line of the internal interface 130. The multiplexer 142 connects a data communication line between the internal interface 130 and the memory 120 according to the command of the controller 150.

The elements of the display apparatus 100 have been described above. Hereinafter, operations of the switch 140, which are performed when main power is not supplied to the display apparatus 100 and when main power is supplied to the display apparatus 100, will be explained.

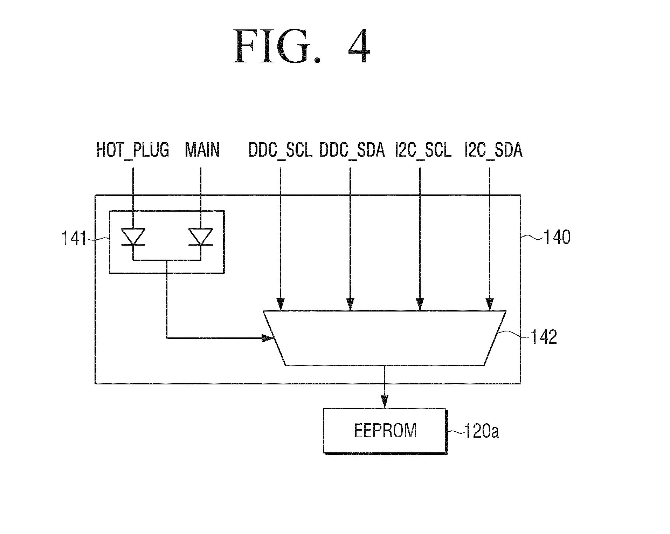

FIG. 4 is a block diagram illustrating the switch according to an exemplary embodiment. Referring to FIG. 4, the switch 140 may include a power selector 141 and a multiplexer 142. In FIG. 4, an EEPROM 120a is illustrated as an example of a memory.

The power selector 141 receives power from a hot plug power line and a main power line. The power selector 141 may include a diode which, if power is supplied from only one power line, prevents a reverse current from flowing into the other line. For example, if only hot plug power is supplied, the diode connected to the hot plug power line is in a forward direction and thus a current flows into the hot plug power line. However, the diode connected to the main power line is in a backward direction with reference to the input current and thus a current does not flow into the main power line. Accordingly, the input current is supplied only to the multiplexer 142. Likewise, a current flowing into the main power line does not flow into the hot plug power line and is supplied only to the multiplexer 142.

The multiplexer 142 selects one of data that is input from the host apparatus 200 and data that is input through the internal interface 130 and stores the data in the memory. DDC_SCL of the input signals of the multiplexer 142 refers to a clock signal that is received from the host apparatus 200. DDC_SDA refers to a data signal that is received from the host apparatus 200. I2C_SCL refers to a clock signal that is received from the internal interface 130. I2C_SDA refers to a data signal that is received from the internal interface 130. Although not shown in FIG. 4, the multiplexer 142 connects a communication line with the host apparatus 200 or the internal interface 130 according to a control signal of the controller 150.
If the main power is not supplied and only the hot plug power is supplied, a basic value related to the communication line connection in the multiplexer 142 may be set to connect the communication line with the host apparatus.

In some situations, the switch 140 may include an additional circuit. For example, the switch 140 may include an AND gate which includes the hot plug power line and the main power line as an input line. An output unit of the AND gate may be connected to the control line of the multiplexer 142. An output value of the AND gate has a logic value of 0 if the hot plug power line is on and the main power line is off, and has a logic value of 1 if the hot plug power line is on and the main power line is on. If the AND gate has a logic value of 0, the multiplexer 142 may connect a communication line with the host apparatus 200. If the AND gate has a logic value of 1, the multiplexer 142 may selectively connect the communication line of the host apparatus 200 or the data communication line of the internal interface 130 to the EEPROM 142 according to a control signal of the controller 150.

The operation performed when the main power is turned off will be explained. If the main power is turned off, the switch 140 is operated by the hot plug power. Since the hot plug power is supplied to the multiplexer 142, the multiplexer 142 can be operated. As described above, if only the hot plug power is supplied, the switch 140 connects the communication line with the host apparatus 200. Although not shown in FIG. 4, the hot plug power may be supplied to an element that is required to communicate with the display apparatus 100 (for example, the EEPROM 120a), besides the switch 140.

Accordingly, the host apparatus 200 may store a response signal for responding to the EDID input or necessary screen setting data in the EEPROM 120a of the display apparatus 100.

If the main power is turned on, all of the elements of the display apparatus 100 including the controller 150 are operated. Accordingly, the switch 140 may selectively connect the communication line of the host apparatus 200 or the data communication line of the internal interface 130 to the EEPROM 142 according to a control signal of the controller 150. For example, if the EEPROM 142 is connected to the communication line of the host apparatus 200, the display apparatus 100 may receive the response signal for responding to the EDID or necessary screen setting data from the host apparatus 200, and may store the same in the EEPROM 120a. If the EEPROM 142 is connected to the communication line of the internal interface 130, the display apparatus 100 may store user setting value related to the OSD in the EEPROM 120a.

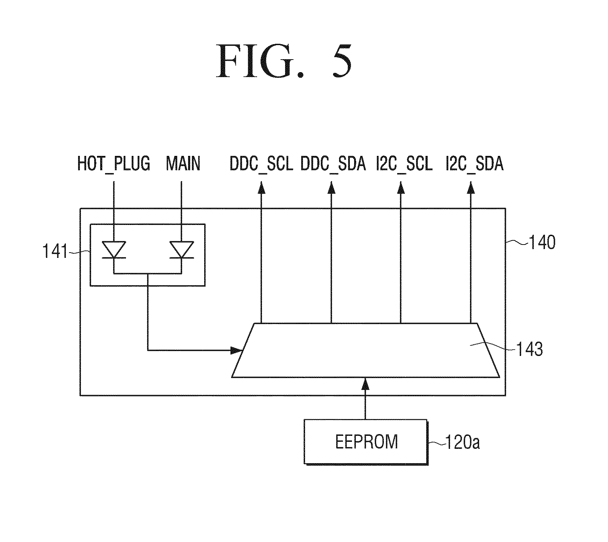

FIG. 5 is a block diagram illustrating a switch according to another exemplary embodiment. Referring to FIG. 5, the switch 140 includes a power selector 141 and a de-multiplexer 142. In FIG. 5, an EEPROM 120a is illustrated as an example of a memory.

The power selector 141 is the same as that of FIG. 4 and thus a redundant explanation is omitted.

The de-multiplexer 143 outputs screen setting data stored in a memory to one of the host apparatus 200 and the internal interface 130. For example, if the main power is turned on, a control signal of the controller 150 is input to the de-multiplexer 143 through the control line of the internal interface 130.

If the control signal of the controller 150 is a command to communicate with the host apparatus 200, the de-multiplexer 143 connects a communication line between the EEPROM 120a and the host apparatus 200. Accordingly, EDID stored in the EEPROM 120a is transmitted to the host apparatus 200. If the control signal of the controller 150 is a command to communicate with the internal interface 130, the de-multiplexer 143 connects a communication line between the EEPROM 120a and the internal interface 130. Accordingly, OSD setting data stored in the EEPROM 102a is transmitted to the internal interface 130.

If the main power is turned off and the hot plug power is turned on, the de-multiplexer 143 connects the communication line between the host apparatus 200 and the EEPROM 120a in the same way as in FIG. 4. Accordingly, the EDID stored in the EEPROM 120a may be transmitted to the host apparatus 200.

The operations performed if the main power is turned on and if the main power is turned off have been described above. Hereinafter, a method for controlling of the display apparatus 100 will be explained.

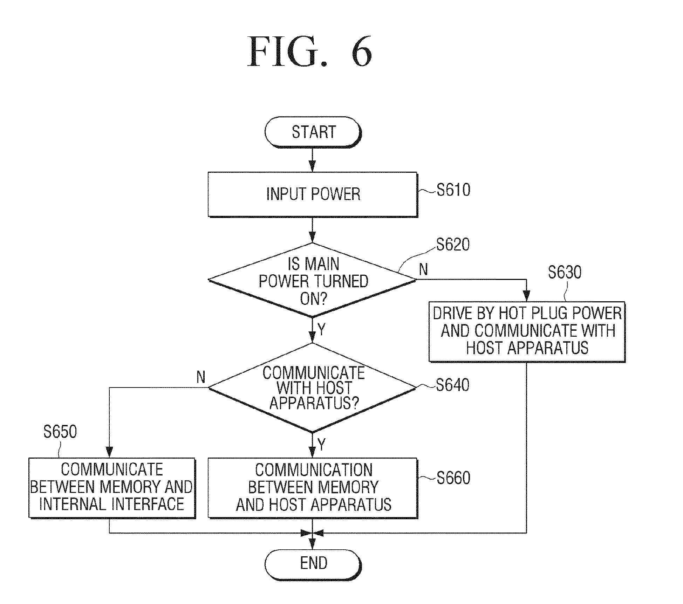

FIG. 6 is a flowchart illustrating a method for controlling of the display apparatus 100 according to an exemplary embodiment.

Referring to FIG. 6, the display apparatus receives power (S610). The power may be hot plug power or main power. The main power is general power and operates all elements of the display apparatus. The hot plug power is power for transmitting EDID to the host apparatus. Accordingly, the hot plug power is supplied to only the elements of the display apparatus that are needed in order to communicate between the display apparatus and the memory of the display apparatus.

It is determined whether main power is turned on (S620). If main power is not turned on, some element of the display apparatus (for example, the switch and the memory) is driven by the hot plug power and communicates with the host apparatus (S630). Even if only the hot plug power is supplied, communication between the memory and the host apparatus may be performed.

If the main power is turned on, it is determined whether the display apparatus communicates with the host apparatus (S640). If the main power is turned on, the display apparatus selectively performs communication between the memory and the host apparatus or communication between the memory and the internal interface according to a control signal of the controller. If the display apparatus does not communicate with the host apparatus, it is determined that communication with the internal interface is performed. If communication with the internal interface is performed, the display apparatus performs communication between the memory and the internal interface (S650). If communication with the host apparatus is performed, the display apparatus performs communication between the memory and the host apparatus (S660). The communication between the memory and the host apparatus or the communication between the memory and the internal interface is selected by the switch according to the control signal of the controller. The detailed process is the same as described above and thus is omitted.

The method for controlling of the display apparatus according to the above exemplary embodiment may be embodied by a program and may be provided to the display apparatus.

For example, a non-transitory computer readable medium, which stores a program for switching between communication between the memory and the host apparatus or communication between the memory and the internal interface, performing communication with the host apparatus using the hot plug power if the main power is turned off, and switching between communication between the memory and the host apparatus or communication between the memory and the internal interface using the main power if the main power is turned on, may be provided.

The non-transitory computer readable medium refers to a medium that stores data semi-permanently rather than storing data for a very short time, such as a register, a cache, and a memory, and is readable by an apparatus. Specifically, the above-described various applications or programs may be stored in a non-transitory computer readable medium such as a compact disc (CD), a digital versatile disk (DVD), a hard disk, a Blu-ray disk, a universal serial bus (USB) memory stick, a memory card, and a read only memory (ROM).

The foregoing exemplary embodiments and advantages are merely exemplary and are not to be construed as the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a display;
a memory arranged to store at least screen setting data on the display;
an interface arranged to perform data communication in the display apparatus; and
a switch arranged to switch between a first communication between the memory and a host apparatus and a second communication between the memory and the interface,
wherein the switch is arranged to be driven by one from among hot plug power and main power according to a condition, and, if the main power is turned off, the switch is arranged to be driven by the hot plug power and is arranged to switch to communication with the host apparatus.

2. The display apparatus as claimed in claim 1, further comprising a controller arranged to be driven by the main power,
wherein, if the main power is turned on, the switch is arranged to be driven by the main power, and the controller is arranged to control the switch to switch between the first communication between the memory and the host apparatus and the second communication between the memory and the interface.

3. The display apparatus as claimed in claim 1 or 2, wherein the switch comprises:
a selector arranged to receive one from among the hot plug power and the main power; and
a multiplexer arranged to select one from among data that is input from the host apparatus and data that is input from the interface, and to store the data in the memory.

4. The display apparatus as claimed in any one of claims 1 to 3, wherein the switch further comprises a de-multiplexer arranged to output the screen setting data stored in the memory to one from among the host apparatus and the interface.

5. The display apparatus as claimed in any one of claims 1 to 4, wherein the memory is a single electrically erasable programmable read-only memory (EEPROM).

6. The display apparatus as claimed in any one of claims 1 to 5, wherein, if the main power is turned off, the hot plug power is supplied from the host apparatus to output the screen setting data to the host apparatus.

7. The display apparatus as claimed in any one of claims 1 to 6, wherein the screen setting data comprises at least one from among extended display identification data (EDID), on-screen display (OSD) setting data, and user setting data.

8. A method for controlling of a display apparatus which stores screen setting data in a memory, the method comprising:
receiving at least one from among main power and hot plug power; and
switching between a first communication between the memory and a host apparatus and a second communication between the memory and an interface of the display apparatus,
wherein the switching comprises, if the main power is turned off, driving the display apparatus by the hot plug power and performing communication with the host apparatus, and, if the main power is turned on, driving the display apparatus by the main power and switching between the first communication between the memory and the host apparatus and the second communication between the memory and the interface.

9. The method as claimed in claim 8, wherein the switching comprises selecting one from among data that is input from the host apparatus and data that is input from the interface, and storing the data in the memory.

10. The method as claimed in claim 8 or 9, wherein the switching comprises outputting the screen setting data stored in the memory to one from among the host apparatus and the interface.

11. The method as claimed in any one of claims 8 to 10, wherein the memory is a single electrically erasable programmable read-only memory (EEPROM).

12. The method as claimed in any one of claims 8 to 11, wherein, if the main power is turned off, the hot plug power is supplied from the host apparatus to output the screen setting data to the host apparatus.

13. The method as claimed in any one of claims 8 to 12, wherein the screen setting data comprises at least one from among extended display identification data (EDID), on-screen display (OSD) setting data, and user setting data.
